# EUROPEAN PATENT SPECIFICATION

(11) **EP 4 634 596 B1**
(45) Date of publication and mention of the grant of the patent: **30.09.2026**
(21) Application number: 23833080.7
(22) Date of filing: 15.12.2023
(51) Int. Cl.: F27B 1/00, C04B 2/12, F27B 1/02, F27D 17/00

(54) **A PFR-LIME KILN PROVIDED WITH A NOX ABATEMENT SYSTEM**
EIN PFR-KALKOFEN MIT NOX-ABSCHEIDUNGSSYSTEM
FOUR À CHAUX PFR POURVU D'UN SYSTÈME DE RÉDUCTION DE NOX

(30) Priority: 16.12.2022 IT 202200025779
(43) Date of publication of application: 22.10.2025
(73) Proprietor: Yara International ASA, 0277 Oslo (NO); Fassa S.r.l., 31027 Spresiano (TV) (IT)
(72) Inventor: RUNGGER, Werner, 39030 San Martino in Badia (BZ) (IT); CARUSO, Guido, 1230 Wien (Vienna) (AT); KURKA, Wolfgang, 73431 Aalen (DE); BERNARDI, Lorenzo, 31027 Spresiano (TV) (IT)
(74) Representative: De Clercq & Partners
(86) International application number: PCT/EP2023/086041
(87) International publication number: WO 2024/126781

(56) References cited:
- WO-A1-2018/220520
- CN-A- 104 645 828
- CN-A- 114 184 053
- JP-A- 2002 060 254

## Description

### Technical field

The present disclosure relates to a Parallel Flow Regenerative (PFR) lime kiln which is provided with a NOₓ abatement system.

### Background

Lime is produced by burning limestone in kilns. The limestone is crushed into particles with a size ranging from a few cm up to 10 cm. The lime is obtained by calcinating the limestone. In this calcination process, calcium carbonate (CaCO₃) is converted to calcium oxide (CaO) and carbon dioxide (CO₂) using heat, which is supplied by burning fuel within the kiln.

There are two basic types of lime shaft kilns which are known today. A first type exists of a shaft kiln having a single vertical shaft where limestone is charged at the top thereof and lime is discharged at the bottom thereof. The lime and the limestone move slowly downwards in the shaft by gravity. The calcination process takes place in the middle of the kiln where fuel is combusted.

Another type of lime kiln is a Parallel Flow Regenerative (PFR) shaft kiln which has two interconnected vertically oriented shafts. This type of kiln is applied in most of the newer lime production plants. Each shaft operates in two different modes, i.e., a burning and a non-burning mode. While one shaft operates in the burning mode and calcines the limestone, the other operates in the non-burning mode and preheats the limestone. Each shaft can also be divided into three different zones, i.e., a pre-heating zone, a combustion zone and a cooling zone. The two shafts are connected to each other by means of a crossover (overflow) channel at the bottom of the combustion zone. This crossover channel allows flow of gas between the two shafts.

Limestone is charged alternatively to the two shafts and flows downward by gravity flow. In the shaft, which is in burning mode, combustion air flows downward through the heated charge material. After being preheated by the charge material, the combustion air combines with the fuel, which is normally natural gas, oil or biomass, and this air / fuel mixture is fired downward into the combustion zone. The hot combustion gases pass flow upward through the flue gas shaft combustion zone in the flue gas shaft. The function of the two shafts is reversed on a 10 - 12 minutes cycle. Cooling air flows upward through the shaft counter currently to the flow of the calcined product. This air mixes with the combustion gases in the crossover channel providing additional combustion air. The lime flows by gravity from the bottom of both shafts. The difference with rotary kilns is that it is discontinuous, and it has a higher efficiency.

Nitrogen oxides (NOx), including nitric oxide (NO) and nitrogen dioxide (NO₂), are one of the most significant emission components emitted by a lime kiln. The NOₓ emissions are mainly dependent on the design of the kiln and, for a particular kiln, on the fuel nitrogen content and combustion temperature.

It is already known to apply a Selective Non-Catalytic Reduction (SNCR)-system to reduce NOx in PFR lime kilns. The SNCR-system comprises two or more injection lances which are installed in the connecting channel between the two shafts and which are arranged to inject a reducing agent such as an ammonia solution, ammonia precursor compounds or a urea solution into the flue gas produced by the PFR lime kilns to reduce the NOₓ to N₂ and water vapor. The problem with this technology however is that the efficiency thereof requires contact times between the reducing agent and the NOₓ which is very limited with such type of lime production plants. There is furthermore an issue with the fact that this type of lime production plant does not apply a constant gas flow and a constant NOₓ emission, but rather a cyclical one.

In WO 2018/220520, a plant for the abatement of nitrogen oxides and their mixtures present in the fumes of PFR lime kilns is described. This plant comprises a first ducting which collects the combustion fumes coming from the outlet of two shafts of the kiln, and further a heater for heating the fumes flowing in this duct and supplying heated fumes to a second ducting in which an injector is located for injecting an ammonia solution in the second ducting, which is mixed with the flowing fumes. The plant comprises further a third ducting which exits from the injector and which carries the ammonia solution and the flowing fumes to a catalytic filter, comprising a vanadium-oxide based catalytic fabric, and a fourth ducting, downstream this filter, which carries the residual fumes to a stack. The heater heats the fumes up to a temperature of higher than 150 °C. It has been disclosed by the applicant of this patent application that the tests conducted in an industrial pilot have led to the conclusion that with this plant, a NOₓ reduction efficiency of 65% at a temperature of 180 °C can be obtained.

A problem with this plant is that the catalytic filter is vulnerable to poisoning. Furthermore, regular replacement of filter bags is necessary. Also, such catalytic filters are also only able to operate at temperatures higher than 180 °C. Finally, only a low NOₓ reduction efficiency can be obtained with such a plant.

CN 114184053 describes a low-temperature SCR denitration device for lime kiln flue gas, including an SCR reactor, wherein the SCR reactor's flue gas outlet is in communication with a chimney of the lime kiln through a draught fan, and the flue gas inlet of the SCR reactor is in communication with a bag filter. In the SCR reactor, a flue gas uniform distribution device and a catalyst are arranged. The catalyst is a low-temperature catalyst with sulphur and alkali metal resistance which reacts at a typical pre-set temperature of between 160 °C to 180 °C. The SCR denitration device further comprises a combustion chamber which is arranged on the flue gas for denitration between the SCR reactor and the bag filter, and includes a pipeline burner and a double-fluid (water and ammonia) spray gun installed in the combustion chamber, wherein a liquid inlet of the two-fluid spray gun is in communication with an ammonia water supply device. In this combustion chamber, the flue gas to be treated is heated through the pipeline burner, the ammonia water is atomized and is sprayed by the two-fluid gun into small droplets by using the temperature of the high-temperature flue gas in the combustion chamber. The heated flue gas to be treated and the atomized ammonia water are then simultaneously conveyed.

The disadvantage of device is that additional parts such as the combustion chamber with the pipeline burner are necessary to heat up the flue gas to be treated and to atomize the ammonia water to a suitable temperature such that it can be denitrated in the SCR reactor.

It is consequently a goal of the present disclosure to provide a PFR lime kiln in which the nitrogen oxides present in the flue gases produced by this kiln are sufficiently reduced to the applicable legal limits, while maintaining the productivity and the efficiency of the PFR lime kiln. It is a further goal of the present disclosure to provide a PFR lime kiln having a simple system to reduce the nitrogen oxides, eliminating additional parts.

### Summary

According to a first aspect of the present disclosure, a PFR (production) lime kiln is described, comprising at least two vertical shafts which are connected to each other by means of a crossover channel, wherein each shaft comprises a burning system arranged to provide heat for combustion of limestone, wherein during the combustion process exhaust gas is produced comprising dust and nitrogen oxides (NOₓ), and wherein the shafts are arranged to evacuate the exhaust gas out of the PFR lime kiln, wherein the PFR lime kiln further comprises
- a dust treatment system arranged to reduce the dust present in the exhaust gas,
- a Selective Catalytic Reduction (SCR) system situated downstream the dust treatment system and being arranged to reduce the NOₓ in the exhaust gas to dinitrogen (N₂) and water vapour (H₂O), comprising
   - a catalyst, also referred to herein as a "low temperature catalyst", which is arranged to operate at a temperature of between 150°C and 160°C, and
   - at least one injection lance which is placed in a duct which is situated between the dust treatment system and the catalyst, wherein the duct is arranged to allow the exhaust gas to flow through it, and wherein the at least one injection lance is arranged to inject a reducing agent in the exhaust gas present in the duct.

Although there is a prejudice that by using SCR, issues are expected to arise because of the dust and sulphur oxide which leads to catalyst poison formation in lower flue gas temperatures, the applicant has found that an SCR-system can be used to efficiently reduce NOₓ in the exhaust gases of PFR lime kilns.

A further problem with the PFR lime kilns is that they operate in a cyclic mode (see the description of this mode of action above) with fairly short cycles (usually between 10 and 12 minutes) through which the emission profile in the exhaust gas produced in the shafts varies throughout the cycles. Furthermore, the emission profile also varies between the start-up of the kiln, in which there is fresh air with a lot of oxygen and a minor amount of NOₓ, the starting of the burning process in which there is a peak of CO₂ and NOₓ, and the production mode of the kiln, in which there is a varying amount of NOₓ that needs to be reduced depending on the state of the cycle.

The goal of the present disclosure is further to provide in a PFR lime kiln with an SCR system as described above which provides in a simple and accurate solution to deal with the discontinuous operation mode of the PFR lime kiln and the consequently unstable process conditions and the unstable emissions.

In a particular embodiment of a PFR lime kiln according to the present disclosure, the PFR lime kiln is arranged to operate in a cyclic operation, wherein in one cycle, one of the shafts operates in a burning mode wherein the limestone is burnt and calcines the limestone, while the other shaft operates in a non-burning mode, wherein the limestone is pre-heated, and wherein in a second cycle, the mode of operation is reversed, wherein the SCR-system comprises a fast response gas analyser which is arranged to detect the amount of NOₓ present in the exhaust gas in the duct, which is situated between the dust treatment system and the catalyst, upstream of the at least one injection lance, and which is arranged to steer the injection of the reducing agent by the at least one injection lance in the exhaust gas present in the duct, based on the amount of exhaust gas and NOₓ in the exhaust gas varying throughout the cyclic operation of the PFR lime kiln.

This solution allows to determine the amount of NOₓ before injection of reducing agent in order to be able to calculate how much reducing agent needs to be injected in the exhaust gas to sufficiently reduce the NOₓ. This allows that the injection of the reducing agent can constantly and quickly be adjusted as a response to the varying amount of exhaust gas and the varying amount of NOₓ in the exhaust gas coming from the PFR lime kiln.

In a more particular embodiment of a PFR lime kiln according to the present disclosure, the fast response gas analyser is an extractive gas analyser or an in-situ gas analyser. Extractive gas analysers extract a gas sample for measurement away from the point source while in-situ gas analysers measure the gas at the point source. In-situ gas analysers are consequently able to react faster to the NOₓ-load in the exhaust gas.

In a particular embodiment of a PFR lime kiln according to the present disclosure, the PFR lime kiln comprises a bypass duct arranged to enable the exhaust gas to bypass the SCR-system in case the conditions of the exhaust gas are not suited for the SCR-system.

Typically, when the PFR lime kiln is started up, the exhaust (flue) gas will heat up the whole kiln, including catalyst of the SCR-system. In order to limit the condensation on the catalyst, it is recommended to bypass the catalyst until the rest of the PFR lime kiln has reached the appropriate temperature. Other situations where this bypass is used are:
- to avoid a complete stop of the kiln in case there is a too high pressure drop in the catalyst,
- to perform limited maintenance, under certain safety conditions,
- to avoid the potential deactivation of the catalyst in case there is a malfunction of the kiln or the exhaust gas cleaning system, or
- to reduce energy consumption in case the use of the catalyst is not required.

In an optional embodiment of a PFR lime kiln according to the present disclosure, the PFR lime kiln comprises an auxiliary burner to heat the exhaust gas to a temperature of between 150°C and 160°C, in case the temperature of the exhaust gas is too low to enter the catalyst.

In an optional embodiment of a PFR lime kiln according to the present disclosure, the catalyst comprises vanadium pentoxide.

In a more specific embodiment of a PFR lime kiln according to the present disclosure, the dust treatment system comprises a bag filter system or an electrostatic precipitator.

According to a second aspect of the present disclosure, a method is described for reducing NOₓ in exhaust gas produced during the combustion of limestone in a PFR lime kiln comprising at least two vertical shafts which are connected to each other by means of a crossover channel, wherein each shaft comprises a burner arranged combusting limestone and, thus producing exhaust gas comprising dust and NOₓ, the method comprising the steps of
- flowing of the exhaust gas from the PFR lime kiln through a dust treatment system and thereby reducing the dust present in the exhaust gas;
- flowing of the exhaust gas from the dust treatment system to an SCR-system, in order to reduce the amount of NOx in the exhaust gas, this step comprising the following steps:
   - flowing of the exhaust gas from the dust treatment system to a low temperature catalyst which operates at a temperature of between 150°C and 160°C, more in particular at 155°C, through a duct which connects the dust treatment system with the low temperature catalyst, in the meantime, injecting reducing agent in the exhaust gas using one or more injection lances and mixing of the exhaust gas with the reducing agent,
   - flowing of the mixture of exhaust gas and reducing agent to and through the low temperature catalyst, in the meantime reducing the NOₓ present in this mixture to dinitrogen (N₂) and water vapour (H₂O).

In an embodiment of a method according to the present disclosure, the PFR lime kiln operates in a cyclic operation, wherein in one cycle, one of the shafts operates in a burning mode wherein the limestone is burnt and calcines the limestone, while the other shaft operates in a non-burning mode, wherein the limestone is pre-heated, and wherein in a second cycle, the mode of operation is reversed, and wherein the method comprises the steps of detecting the amount of NOₓ in the exhaust gas present in the duct, which is situated between the dust treatment system and the catalyst, before the at least one injection lance using a fast response gas analyser, and steering the injection of the reducing agent by the at least one injection lance in the exhaust gas present in the duct, based on the amount of exhaust gas and NOₓ in the exhaust gas varying throughout the cyclic operation of the PFR lime kiln.

In a more specific embodiment of a PFR lime kiln according to the present disclosure, the low temperature catalyst is arranged to operate at a temperature of 155°C.

In a typical embodiment of a PFR lime kiln according to the present disclosure, the auxiliary burner is arranged to heat the exhaust gas to a temperature of 155°C, in case the temperature of the exhaust gas is too low.

In an optional method according to the present disclosure, the method comprises the step of letting the exhaust gas flow through a bypass duct bypassing the SCR-system in case the conditions of the exhaust gas are not suited for the SCR-system. These conditions are described above.

In a possible method according to the present disclosure, the method comprises the step of heating the exhaust gas to a temperature between 150°C and 160°C, more in particular to a temperature of 155°C, using an auxiliary burner, in case the temperature of the exhaust gas is too low to enter the catalyst.

In a particular method according to the present disclosure, a PFR lime kiln according to the present disclosure as described above is used.

An embodiment of an SCR-system according to the present disclosure comprises:
- a low temperature catalyst which is arranged to operate at a temperature between 150°C and 160°C, more in particular 155°C;
- one or more injection lances which are arranged to be installed in a duct which is situated between a dust treatment system of the PFR lime kiln and the catalyst, which one or more injection lances are arranged to inject reducing agent in the exhaust gas which flows through the duct; and
- a fast response gas analyser which is arranged to detect the amount of exhaust gas present in the duct as well as the amount of NOx in the exhaust gas present in the duct, and which is arranged to steer the injection of the reducing agent by the at least one injection lance in the exhaust gas present in the duct, based on the amount of exhaust gas and NOₓ in the exhaust gas varying throughout the cyclic operation of the PFR lime kiln.

The fast response gas analyser more in particular is an extractive gas analyser or an in-situ gas analyser.

In an optional embodiment of an SCR-system according to the present disclosure, the SCR-system comprises an additional burner which is arranged to heat the exhaust gas to a temperature between 150°C and 160°C, more specifically to 155°C, in case the exhaust gas would be too low to enter the catalyst.

### Description of the figures

FIG. 1 shows a flow chart of an example of a PFR lime kiln which is arranged with an SCR-system according to the present disclosure.
FIG. 2 shows the SCR-system as shown in FIG. 1 in more detail.

### Detailed description

Limestone is a common type of carbonate sedimentary rock and is the main source of lime. It is composed mostly of the minerals calcinate and aragonite, which are different crystal forms of calcium carbonate (CaCO₃).

A PFR (parallel flow regenerative) shaft kiln to produce lime, also called PFR lime kiln, comprises two vertical shafts which are connected to each other by means of a crossover channel. In each of the shafts, a burning system is arranged to provide heat for the combustion of limestone present in the shafts. Each of the shafts work with each other, i.e., while the one is calcining the limestone (normally at a temperature of around 1150°C), the other preheats the limestone. In the shaft functioning as burning shaft, the limestone is calcined in parallel flow. The hot combustion gases produced during the calcining process are transferred through the crossover channel to the shaft functioning as non-burning shaft in which the limestone is preheated in counter flow in the upper area of the shaft. At regular points in time, the flow direction of the gases is reversed allowing the regenerative preheating of the limestone to take place (the limestone in the preheating zone of the kiln functions as a heat exchanger). This type of furnace has a continuous cycle operation during the entire year.

The PFR lime kiln according to present disclosure comprises a dust treatment system to reduce the dust in the exhaust gas. The temperature range of the outlet of the dust treatment system ranges from 130°C to 160°C. Typical dust treatment systems are bag filter systems or electrostatic precipitators.

The PFR lime kiln according to the present disclosure further comprises an SCR-system which is installed downstream and close to the dust treatment system. The SCR-system comprises an SCR-reactor with one or more so-called low temperature catalysts, i.e. catalysts which can operate, or stated differently are catalytically active, at temperatures between 150°C and 160°C, more in particular at a temperature of 155°C or about 155 °C, such as to a temperature of 155°C +/- 2°C. To operate at these low temperatures, the catalyst typically comprises an amount of less than 2,5 weight% vanadium pentoxide (V₂O₅). The number of catalysts and the volume of the catalysts is determined at the design of the SCR-reactor and is adapted depending on the amount of NOₓ to be reduced in the exhaust gas.

At the bottom of the SCR-reactor, a net measuring system is provided which is a system of different pipes to verify the NOₓ/NH₃-concentration in the complete section.

The SCR-system further comprises a duct which is situated between the dust treatment system and the SCR-reactor, and which is arranged to let exhaust gas flow through it. In this duct, one or more injection lances are arranged to inject a reducing agent in the exhaust gas which flows through the duct. The number of injection lances depends on the size of the kiln. Typically, between 3 and 6 injection lances are provided. The reducing agent more specifically is an aqueous ammonia solution. More in particular, the reducing agent is an aqueous ammonia solution with a concentration of between 19 wt.% and 32 wt.% of ammonia, which is diluted with water before it is injected in the duct.

In order to adequately adapt the amount of reducing agent injected in the exhaust gas before the catalyst as a response to the varying amount of exhaust gas and NOx in the exhaust gas present in the duct which is situated downstream the dust treatment system and upstream the catalyst, the SCR-system comprises a fast response gas analyser. This fast response gas analyser can detect the amount of NOₓ in the exhaust gas present in the duct, before the at least one injection lance. This fast response gas analyser can then steer or control the injection of the reducing agent by the at least one injection lance in the exhaust gas present in the duct based on these two varying parameters. This fast response gas analyser can be an extractive gas analyser or an in-situ gas analyser, the latter one providing the quickest response.

To take care that the temperature of the exhaust gas flowing in the duct to the catalyst is constant, and not too low, it is possible, if required, to provide in an auxiliary burner which is arranged to heat the exhaust gas present in the duct to a temperature between 150°C and 160°C, more in particular to about 155°C. This auxiliary burner is thus arranged to keep the temperature of the exhaust gas in the duct at a constant temperature such that suitable conditions are generated to obtain the necessary reducing of the NOₓ in the exhaust gas. Since the catalyst is arranged to operate at a temperature between 150°C and 160°C, more specifically at 155°C, the exhaust gas present in the duct is heated to this temperature. This auxiliary burner more in particular can be a gas burner, for instance working with natural gas primarily consisting of methane (NH₄), or an electrical heater.

The PFR lime kiln furthermore comprises a bypass duct arranged to enable the exhaust gas to bypass the SCR-system in case the conditions of the exhaust gas are not suited for the SCR-system. This is possibly done
- at start-up of the PFR lime kiln,
- in order to avoid a complete stop of the kiln in case there is a too high pressure drop in the catalyst,
- to perform limited maintenance, under certain safety conditions,
- to avoid the potential deactivation of the catalyst in case there is a malfunction of the kiln or the exhaust gas cleaning system, and / or
- to reduce energy consumption in case the use of the catalyst is not required.

In the method for reducing NOₓ in the exhaust gas produced during the combustion of limestone in a PFR lime kiln as described above, which thus comprises at least two vertical shafts which are interconnected by means of a crossover channel, and which each comprises a burning system to provide heat for the combustion of limestone present in the shafts, and meanwhile produces exhaust gas comprising dust and NOₓ, the exhaust gas from the PFR lime kiln flows through the dust treatment system which reduces in the meantime the amount of dust present in the exhaust gas. Thereafter, the dust depleted flue gas flows to the SCR system in which the NOₓ in the exhaust gas will be reduced. In this step, the exhaust gas flows in a duct which connects the dust reduction system with the catalyst from the SCR-system, this duct being arranged with one or more injection lances which inject reducing agent in the exhaust gas which flows through the duct. The reducing agent is mixed with the exhaust gas in the duct using a mixer. This mixture flows then to the catalyst which will reduce the NOₓ present in this mixture.

In particular embodiments, during the flow of the exhaust gas through the duct, the amount of exhaust gas and the amount of NOₓ is measured by a fast response gas analyser which will steer the amount of reducing agent which is injected by the one or more injection lances in the exhaust gas based on the varying amount of exhaust gas and NOₓ during the cyclic operation of the PFR lime kiln.

The method can further comprise the step of heating the exhaust gas in the duct to a temperature between 150°C and 160°C, more in particular to about 155°C, by means of an auxiliary burner, this in case the temperature of the exhaust gas would be too low for the catalyst.

In a possible method, the exhaust gas can also be directed to flow through a bypass duct which bypasses the SCR-system in case the circumstances are not suited for the SCR-system to let the exhaust gas flow through it. Examples of these circumstances are described above.

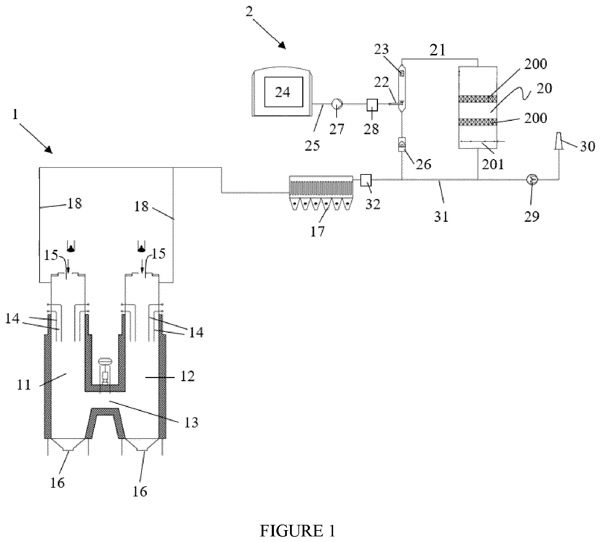

In figure 1, an exemplary embodiment of a PFR lime kiln arranged with an SCR-system arranged to reduce the amount of NOx present in the exhaust gas produced by the PFR lime kiln is shown. The PFR lime kiln (1) comprises two vertically oriented shafts (11 and 12) which are connected to each other by means of a cross-over channel (13). Each of the shafts (11, 12) is provided with a closable opening (15) at the top thereof to load the shaft (11, 12) with limestone. Each of the shafts (11, 12) is provided with a burning system which each comprise one or more fuel lances (14) arranged to introduce fuel in the form of gas, biomass, coal, etc to be burned in the shaft (11, 12) to produce heat to calcine the limestone in the shafts (11, 12). Air is introduced in the closable openings (15) to assist in the burning process of the fuel. When a shaft (11 or 12) is in burning mode, the burner calcines the limestone. The hot combustion gases produced during the calcining process are then transferred through the crossover channel (13) to the other shaft (12 or 11), which at that moment is functioning as non-burning shaft, through which the limestone is preheated in counter flow in the upper area of this shaft (12, 11).

Once the combustion process is stopped, the respective shaft (11, 12) is opened at the bottom thereof via a discharge opening (16) to evacuate the produced lime out of the respective shaft (11, 12). After discharging the lime, the combustion process of the limestone in the other shaft (12, 11) is started and new limestone is added to the emptied shaft.

During the combustion of the limestone, exhaust gas is produced which comprises dust and NOₓ. In order to reduce the amount of dust in the exhaust gas, a bag filter system (17) is arranged. The exhaust gas flows via a pipeline (18) from the top of each of the shafts towards the bag filter system (17). Downstream the bag filter system (17), an SCR-system (2) is arranged to reduce the NOx present in the dedusted exhaust gas.

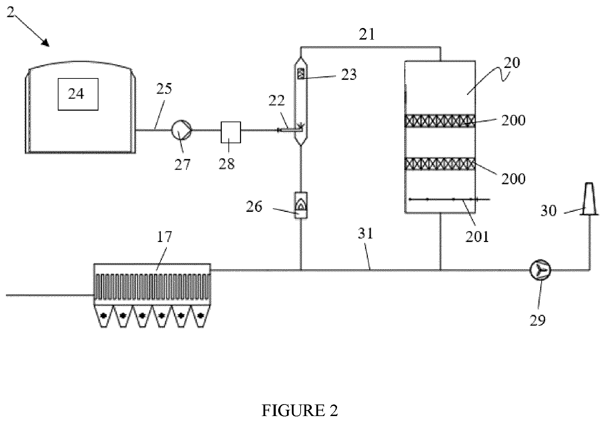

As can be seen in figure 1 and 2, the SCR-system (2) comprises an SCR-reactor (20) and a duct (21) which is provided with one or more injection lances (22) arranged to inject a reducing agent, more in particular aqueous ammonia solution, into the duct (21). The duct is furthermore arranged with a mixer (23) which is situated upstream the injector lance(s) (22) and which is arranged to mix the incoming exhaust gas with the reducing agent. In this exemplary embodiment, an auxiliary burner (26) is provided with is arranged to heat the exhaust gas in the duct (21) in case the temperature thereof would be too low to reduce the NOₓ in the SCR-reactor (20). The reducing agent is stored in a storage tank (24). The injection lance(s) is (are) connected with this storage tank (24) by means of a pipeline (25) which is arranged with a pump (27) and a dosing system (28) to pump the reducing agent out of the storage tank (24) in an appropriate dose to the injection lance(s) (22).

In this exemplary embodiment, the SCR-reactor (20) comprises 2 catalysts (200). The number of catalysts (200) and the volume thereof is determined at the design of the SCR-reactor (20) and is depending on the amount of NOₓ that needs to be reduced in the exhaust gas. At the bottom of the SCR-reactor (20), a net measuring system (201) is provided which is a system of different pipes to verify the NOₓ/NH₃-concentration in the complete section. Downstream the SCR-reactor (20), a fan (29), for instance an induced draft (ID)-fan, is arranged to suck out the cleaned exhaust gas from the SCR-reactor (20) towards a chimney (stack) (30) which discharges the cleaned exhaust gas into the atmosphere.

Downstream the bag filter system (17), a bypass line (31) is provided which is arranged to let the exhaust gas bypass the SCR-reactor (20) in case the conditions of the exhaust gas, for instance the temperature, would be unsuitable for the SCR-system (2).

Furthermore, at the exit of the bag filter system (17), a fast response gas analyser (32) is provided which is arranged to steer the injection of the reducing agent by the one or more injection lances (22) based on the amount of exhaust gas and NOₓ in the exhaust gas which varies throughout the cyclic operation of the kiln.

## Claims

1. A Parallel Flow Regenerative (PFR) lime kiln, comprising at least two vertical shafts which are connected to each other by means of a crossover channel, wherein each shaft comprises a burning system arranged to provide heat for combustion of limestone, wherein during the combustion process exhaust gas is produced comprising dust and nitrogen oxides (NOₓ), and wherein the shafts are arranged to evacuate the exhaust gas out of the PFR lime kiln, wherein the PFR lime kiln further comprises
- a dust treatment system arranged to reduce the dust present in the exhaust gas,
- a Selective Catalytic Reduction (SCR) system situated downstream the dust treatment system and being arranged to reduce the NOₓ in the exhaust gas to dinitrogen (N₂) and water vapour (H₂O),
**characterised in that** the SCR system comprises
• a catalyst which is configured to operate at a temperature of between 150°C and 160°C; and
• at least one injection lance which is placed in a duct which is situated between the dust treatment system and the catalyst, wherein the duct is arranged to allow the exhaust gas to flow through it, and wherein the at least one injection lance is arranged to inject a reducing agent in the exhaust gas present in the duct.

2. A PFR lime kiln according to claim 1, wherein the PFR lime kiln is arranged to operate in a cyclic operation, wherein in one cycle, one of the shafts operates in a burning mode wherein the limestone is burnt and calcines the limestone, while the other shaft operates in a non-burning mode, wherein the limestone is pre-heated, and wherein in a second cycle, the mode of operation is reversed, wherein the SCR-system comprises a fast response gas analyser which is arranged to detect the amount of NOₓ in the exhaust gas present in the duct, which is situated between the dust treatment system and the catalyst, before the at least one injection lance, and which is arranged to steer the injection of the reducing agent by the at least one injection lance in the exhaust gas present in the duct based on the amount of exhaust gas and NOₓ in the exhaust gas varying throughout the cyclic operation of the PFR lime kiln.

3. A PFR lime kiln according to claim 2, wherein the fast response gas analyser is an extractive gas analyser or an in-situ gas analyser.

4. A PFR lime kiln according to any one of claims 1 to 3, wherein the PFR lime kiln comprises a bypass duct arranged to enable the exhaust gas to bypass the SCR-system in case the conditions of the exhaust gas are not suited for the SCR-system.

5. A PFR lime kiln according to any one of claims 1 to 4, wherein the PFR lime kiln comprises an auxiliary burner to heat the exhaust gas to a temperature of between 150°C and 160°C, in case the temperature of the exhaust gas is too low to enter the catalyst.

6. A PFR lime kiln according to any one of claims 1 to 5, wherein the dust treatment system comprises a dust bag filter system or an electrostatic precipitator.

7. A PFR lime kiln according to any one of claims 1 to 6, wherein the catalyst is arranged to operate at a temperature of 155°C.

8. Method for reducing NOₓ in exhaust gas produced during the combustion of limestone in a PFR lime kiln comprising at least two vertical shafts which are connected to each other by means of a crossover channel, wherein each shaft comprises a burning system arranged to produce heat for the combustion of the limestone, thereby producing exhaust gas comprising dust and NOx, the method comprising the steps of
- step 1: flowing of the exhaust gas comprising dust and NOx from the PFR lime kiln through a dust treatment system, thereby reducing the dust present in the exhaust gas;
- step 2: flowing of the exhaust gas from the dust treatment system to an SCR-system, in order to reduce the amount of NOx in the exhaust gas,
• step 3: flowing of the mixture of exhaust gas and reducing agent to and through the catalyst, thereby reducing the NOₓ present in this mixture to dinitrogen (N₂) and water vapour (H₂O).
**characterised in that** step 2 comprises the step of flowing of the exhaust gas from the dust treatment system to a catalyst which operates at a temperature between 150°C and 160°C, through a duct which connects the dust treatment system with the catalyst, and simultaneously injecting a reducing agent in the exhaust gas using one or more injection lances and mixing of the exhaust gas with the reducing agent,

9. A method according to claim 8, wherein the PFR lime kiln operates in a cyclic operation, wherein in one cycle, one of the shafts operates in a burning mode wherein the limestone is burnt and calcines the limestone, while the other shaft operates in a non-burning mode, wherein the limestone is pre-heated, and wherein in a second cycle, the mode of operation is vice versa, and wherein step 2 comprises the steps of detecting the amount of NOx in the exhaust gas present in the duct, which is situated between the dust treatment system and the catalyst, before the at least one injection lance using a fast response gas analyser, and steering the injection of the reducing agent by the at least one injection lance in the exhaust gas present in the duct, based on the amount of exhaust gas and NOₓ in the exhaust gas varying throughout the cyclic operation of the PFR lime kiln.

10. A method according to claim 8 or 9, wherein the method comprises a further step of letting the exhaust gas flow through a bypass duct bypassing the SCR-system in case the conditions of the exhaust gas are not suited for the SCR-system.

11. A method according to any one of claims 8 to 10, wherein step 2 comprises the step of heating the exhaust gas in the duct situated between the dust reducing means and the catalyst to a temperature between 150°C and 160°C, using an auxiliary burner, in case the temperature of the exhaust gas is too low to enter the catalyst.

12. A method according to any one of claims 8 to 11, wherein a PFR lime kiln according to any one of claims 1 to 7 is used.

## Patentansprüche

1. Regenerativer Parallelstrom(PFR)-Kalkofen, umfassend wenigstens zwei vertikale Schächte, die über einen Überströmkanal miteinander verbunden sind, wobei jeder Schacht ein Brennsystem umfasst, das dazu eingerichtet ist, Wärme für die Verbrennung von Kalkstein bereitzustellen, wobei während des Verbrennungsprozesses Abgas erzeugt wird, das Staub und Stickoxide (NOₓ) umfasst, und wobei die Schächte dazu eingerichtet sind, das Abgas aus dem PFR-Kalkofen abzuführen, wobei der PFR-Kalkofen ferner umfasst
- ein Staubbehandlungssystem, eingerichtet zum Verringern des in dem Abgas vorhandenen Staubs,
- ein System zur selektiven katalytischen Reduktion (SCR), das stromabwärts des Staubbehandlungssystems angeordnet ist und dazu eingerichtet ist, das NOₓ in dem Abgas zu Distickstoff (N₂) und Wasserdampf (H₂O) zu reduzieren,
**dadurch gekennzeichnet, dass** das SCR-System umfasst
• einen Katalysator, der dazu gestaltet ist, bei einer Temperatur zwischen 150 °C und 160 °C zu arbeiten; und
• wenigstens eine Einspritzlanze, die in einem Kanal angeordnet ist, der sich zwischen dem Staubbehandlungssystem und dem Katalysator befindet, wobei der Kanal dazu eingerichtet ist, das Abgas durchströmen zu lassen, und wobei die wenigstens eine Einspritzlanze dazu eingerichtet ist, ein Reduktionsmittel in das in dem Kanal vorhandene Abgas einzuspritzen.

2. PFR-Kalkofen nach Anspruch 1, wobei der PFR-Kalkofen dazu eingerichtet ist, in einem zyklischen Betrieb zu arbeiten, wobei in einem Zyklus einer der Schächte in einem Brennmodus arbeitet, wobei der Kalkstein verbrannt und der Kalkstein kalziniert wird, während der andere Schacht in einem Nicht-Brennmodus arbeitet, wobei der Kalkstein vorgeheizt wird, und wobei in einem zweiten Zyklus der Betriebsmodus umgekehrt ist, wobei das SCR-System einen schnell reagierenden Gasanalysator umfasst, der dazu ausgelegt ist, die Menge an NOₓ in dem Abgas, das in dem Kanal vorhanden ist, der sich zwischen dem Staubbehandlungssystem und dem Katalysator befindet, stromaufwärts der wenigstens einen Einspritzlanze zu erfassen, und der dafür eingerichtet ist, die Einspritzung des Reduktionsmittels durch die wenigstens eine Einspritzlanze in das in der Leitung vorhandene Abgas auf der Grundlage der Menge an Abgas und NOₓ in dem Abgas, die während des zyklischen Betriebs des PFR-Kalkofens variiert, zu steuern.

3. PFR-Kalkofen nach Anspruch 2, wobei der schnell reagierende Gasanalysator ein extraktiver Gasanalysator oder ein In-situ-Gasanalysator ist.

4. PFR-Kalkofen nach einem der Ansprüche 1 bis 3, wobei der PFR-Kalkofen einen Bypasskanal umfasst, der dazu eingerichtet ist, dem Abgas zu ermöglichen, das SCR-System zu umgehen, falls die Bedingungen des Abgases nicht für das SCR-System geeignet sind.

5. PFR-Kalkofen nach einem der Ansprüche 1 bis 4, wobei der PFR-Kalkofen einen Hilfsbrenner umfasst, um das Abgas auf eine Temperatur zwischen 150 °C und 160 °C zu erhitzen, falls die Temperatur des Abgases zu niedrig ist, um in den Katalysator einzutreten.

6. PFR-Kalkofen nach einem der Ansprüche 1 bis 5, wobei das Staubbehandlungssystem ein Staubbeutel-Filtersystem oder einen elektrostatischen Abscheider umfasst.

7. PFR-Kalkofen nach einem der Ansprüche 1 bis 6, wobei der Katalysator dafür eingerichtet ist, bei einer Temperatur von 155 °C zu arbeiten.

8. Verfahren zur Reduktion von NOₓ in Abgas, das bei der Verbrennung von Kalkstein in einem PFR-Kalkofen erzeugt wird, der wenigstens zwei vertikale Schächte umfasst, die über einen Überströmkanal miteinander verbunden sind, wobei jeder Schacht ein Verbrennungssystem umfasst, das dazu eingerichtet ist, Wärme für die Verbrennung des Kalksteins zu erzeugen, wodurch Abgas erzeugt wird, das Staub und NOx umfasst, wobei das Verfahren die Schritte umfasst
- Schritt 1: Strömen des Abgases, das Staub und NOx umfasst, aus dem PFR-Kalkofen durch ein Staubbehandlungssystem, wodurch der in dem Abgas vorhandene Staub verringert wird;
- Schritt 2: Strömen des Abgases aus dem Staubbehandlungssystem zu einem SCR-System, um die Menge an NOx in dem Abgas zu verringern;
• Schritt 3: Strömen des Gemischs aus Abgas und Reduktionsmittel zu und durch den Katalysator, wodurch das in diesem Gemisch enthaltene NOₓ zu Distickstoff (N₂) und Wasserdampf (H₂O)reduziert wird,
**dadurch gekennzeichnet, dass** Schritt 2 den Schritt des Strömens des Abgases von dem Staubbehandlungssystem zu einem Katalysator umfasst, der bei einer Temperatur zwischen 150 °C und 160 °C arbeitet, durch einen Kanal, der das Staubbehandlungssystem mit dem Katalysator verbindet, und gleichzeitiges Einspritzen eines Reduktionsmittels in das Abgas unter Verwendung einer oder mehrerer Einspritzlanzen und Mischen des Abgases mit dem Reduktionsmittel.

9. Verfahren nach Anspruch 8, wobei der PFR-Kalkofen in einem zyklischen Betrieb arbeitet, wobei in einem Zyklus einer der Schächte in einem Brennmodus arbeitet, wobei der Kalkstein verbrannt und der Kalkstein kalziniert wird, während der andere Schacht in einem Nicht-Brennmodus arbeitet, wobei der Kalkstein vorgeheizt wird, und wobei in einem zweiten Zyklus der Betriebsmodus umgekehrt ist, und wobei Schritt 2 die Schritte des Erfassens der Menge an NOx in dem Abgas, das in dem Kanal vorhandene ist, der sich zwischen dem Staubbehandlungssystem und dem Katalysator befindet, stromaufwärts der wenigstens einen Einspritzlanze unter Verwendung eines schnell reagierenden Gasanalysators umfasst, und Steuern der Einspritzung des Reduktionsmittels durch die wenigstens eine Einspritzlanze in das in der Leitung vorhanden Abgas auf der Grundlage der Menge an Abgas und NOₓ in dem Abgas, die während des zyklischen Betriebs des PFR-Kalkofens variiert.

10. Verfahren nach Anspruch 8 oder 9, wobei das Verfahren einen weiteren Schritt des Strömenlassens des Abgases durch einen Bypasskanal umfasst, der das SCR-System umgeht, falls die Bedingungen des Abgases nicht für das SCR-System geeignet sind.

11. Verfahren nach einem der Ansprüche 8 bis 10, wobei Schritt 2 den Schritt des Erhitzens des Abgases in der Leitung, die sich zwischen der Staubverringerungseinrichtung und dem Katalysator befindet, unter Verwendung eines Hilfsbrenners auf eine Temperatur zwischen 150 °C und 160 °C umfasst, falls die Temperatur des Abgases zu niedrig ist, um in den Katalysator einzutreten.

12. Verfahren nach einem der Ansprüche 8 bis 11, wobei ein PFR-Kalkofen nach einem der Ansprüche 1 bis 7 verwendet wird.

## Revendications

1. Four à chaux régénératif à écoulement parallèle (PFR), comprenant au moins deux puits verticaux qui sont reliés l'un à l'autre au moyen d'un carneau de liaison, dans lequel chaque puits comprend un système de combustion agencé pour fournir de la chaleur pour la combustion de calcaire, dans lequel, pendant le processus de combustion, un gaz d'échappement est produit comprenant de la poussière et des oxydes d'azote (NOₓ), et dans lequel les puits sont agencés pour évacuer le gaz d'échappement hors du four à chaux PFR, le four à chaux PFR comprenant en outre
- un système de traitement des poussières agencé pour réduire les poussières présentes dans le gaz d'échappement,
- un système de réduction catalytique sélective (SCR) situé en aval du système de traitement des poussières et agencé pour réduire les NOₓ dans le gaz d'échappement en diazote (N₂) et vapeur d'eau (H₂O),
**caractérisé en ce que** le système SCR comprend
• un catalyseur qui est configuré pour fonctionner à une température comprise entre 150 °C et 160 °C ; et
• au moins une lance d'injection qui est placée dans un conduit situé entre le système de traitement des poussières et le catalyseur, dans lequel le conduit est agencé pour laisser circuler le gaz d'échappement à travers lui, et dans lequel l'au moins une lance d'injection est agencée pour injecter un agent réducteur dans le gaz d'échappement présent dans le conduit.

2. Four à chaux PFR selon la revendication 1, dans lequel le four à chaux PFR est agencé pour fonctionner dans un fonctionnement cyclique, dans lequel, dans un cycle, l'un des puits fonctionne dans un mode de combustion dans lequel le calcaire est brûlé et calcine le calcaire, tandis que l'autre puits fonctionne dans un mode de non combustion, dans lequel le calcaire est préchauffé, et dans lequel, dans un deuxième cycle, le mode de fonctionnement est inversé, dans lequel le système SCR comprend un analyseur de gaz à réponse rapide qui est agencé pour détecter la quantité de NOₓ dans le gaz d'échappement présent dans le conduit, qui se trouve entre le système de traitement des poussières et le catalyseur, avant l'au moins une lance d'injection, et qui est agencé pour piloter l'injection de l'agent réducteur par l'au moins une lance d'injection dans le gaz d'échappement dans le conduit sur la base de la quantité de gaz d'échappement et de NOₓ dans le gaz d'échappement variant tout au long du fonctionnement cyclique du four à chaux PFR.

3. Four à chaux PFR selon la revendication 2, dans lequel l'analyseur de gaz à réponse rapide est un analyseur de gaz avec extraction ou un analyseur de gaz *in situ*.

4. Four à chaux PFR selon l'une quelconque des revendications 1 à 3, dans lequel le four à chaux PFR comprend un conduit de dérivation agencé pour permettre au gaz d'échappement de contourner le système SCR dans le cas où les conditions du gaz d'échappement ne conviennent pas au système SCR.

5. Four à chaux PFR selon l'une quelconque des revendications 1 à 4, dans lequel le four à chaux PFR comprend un brûleur auxiliaire pour chauffer le gaz d'échappement jusqu'à une température comprise entre 150 °C et 160 °C, dans le cas où la température du gaz d'échappement est trop basse pour qu'il entre dans le catalyseur.

6. Four à chaux PFR selon l'une quelconque des revendications 1 à 5, dans lequel le système de traitement des poussières comprend un système de filtre à sac à poussières ou un précipitateur électrostatique.

7. Four à chaux PFR selon l'une quelconque des revendications 1 à 6, dans lequel le catalyseur est agencé pour fonctionner à une température de 155 °C.

8. Procédé de réduction de NOₓ dans un gaz d'échappement produit pendant la combustion de calcaire dans un four à chaux PFR comprenant au moins deux puits verticaux qui sont reliés l'un à l'autre au moyen d'un carneau de liaison, dans lequel chaque puits comprend un système de combustion agencé pour produire de la chaleur pour la combustion du calcaire, produisant ainsi un gaz d'échappement comprenant des poussières et des NOx, le procédé comprenant les étapes de
- étape 1 : écoulement du gaz d'échappement comprenant des poussières et des NOx depuis le four à chaux PFR à travers un système de traitement des poussières, réduisant ainsi les poussières présentes dans le gaz d'échappement ;
- étape 2 : écoulement du gaz d'échappement depuis le système de traitement des poussières vers un système SCR, pour réduire la quantité de NOx dans le gaz d'échappement,
• étape 3 : écoulement du mélange de gaz d'échappement et d'agent réducteur vers et à travers le catalyseur, réduisant ainsi les NOₓ présents dans ce mélange en diazote (N₂) et vapeur d'eau (H₂O),
**caractérisé en ce que** l'étape 2 comprend l'étape d'écoulement du gaz d'échappement depuis le système de traitement des poussières vers un catalyseur fonctionnant à une température comprise entre 150 °C et 160 °C, à travers un conduit qui relie le système de traitement des poussières au catalyseur, et simultanément l'injection d'un agent réducteur dans le gaz d'échappement à l'aide d'une ou plusieurs lances d'injection et le mélange du gaz d'échappement avec l'agent réducteur.

9. Procédé selon la revendication 8, dans lequel le four à chaux PFR fonctionne en fonctionnement cyclique, dans lequel, dans un cycle, l'un des puits fonctionne dans un mode de combustion dans lequel le calcaire est brûlé et calcine le calcaire, tandis que l'autre puits fonctionne dans un mode de non combustion, dans lequel le calcaire est préchauffé, et dans lequel, dans un deuxième cycle, le mode de fonctionnement est vice versa, et dans lequel l'étape 2 comprend les étapes de détection de la quantité de NOx dans le gaz d'échappement présent dans le conduit, qui se trouve entre le système de traitement des poussières et le catalyseur, avant l'au moins une lance d'injection à l'aide d'un analyseur de gaz à réponse rapide, et le fait de piloter l'injection de l'agent réducteur par l'au moins une lance d'injection dans le gaz d'échappement présent dans le conduit, sur la base de la quantité de gaz d'échappement et de NOₓ dans le gaz d'échappement variant tout au long du fonctionnement cyclique du four à chaux PFR.

10. Procédé selon la revendication 8 ou 9, dans lequel le procédé comprend une étape supplémentaire consistant à laisser le gaz d'échappement s'écouler à travers un conduit de dérivation contournant le système SCR dans le cas où les conditions du gaz d'échappement ne conviennent pas au système SCR.

11. Procédé selon l'une quelconque des revendications 8 à 10, dans lequel l'étape 2 comprend l'étape consistant à chauffer le gaz d'échappement dans le conduit situé entre le moyen de réduction de poussières et le catalyseur à une température comprise entre 150 °C et 160 °C, en utilisant un brûleur auxiliaire, dans le cas où la température du gaz d'échappement est trop basse pour qu'il entre dans le catalyseur.

12. Procédé selon l'une quelconque des revendications 8 à 11, dans lequel on utilise un four à chaux PFR selon l'une quelconque des revendications 1 à 7.
